# EUROPEAN PATENT SPECIFICATION

(11) **EP 0 282 039 B1**
(45) Date of publication and mention of the grant of the patent: **20.11.1996**
(21) Application number: 88103732.9
(22) Date of filing: 09.03.1988
(51) Int. Cl.: G06F 11/32

(54) **Apparatus and method for diagnosing functions of a data processor**
Vorrichtung und Verfahren zur Diagnose von Funktionen eines Datenprozessors
Dispositif et méthode pour diagnostiquer des fonctions d'un processeur de données

(30) Priority: 10.03.1987 JP 54400/87
(43) Date of publication of application: 14.09.1988
(73) Proprietor: SHARP KABUSHIKI KAISHA, Osaka 545 (JP)
(72) Inventor: Ohashi, Masakazu, Otokuni-gun Kyoto-fu (JP)
(74) Representative: TER MEER - MÜLLER - STEINMEISTER & PARTNER

(56) References cited:
- EP-A- 0 030 160
- EP-A- 0 082 904
- EP-A- 0 258 553
- US-A- 4 654 852
- NAVY TECHNICAL DISCLOSURE JOURNAL, vol. 9, no. 4, June 1984, pages 55-59, Washington, US; G.G. GASTON: "Interactive built in test (Bit)"
- ADVANCES IN INSTRUMENTATION, vol. 40, part 1, 1985, pages 347-362; J.J. PINTO: "Software for industrial microcomputer applications"
- IBM TECHNICAL DISCLOSURE BULLETIN, vol. 29, no. 1, June 1986, pages 429-430, New York, US; "CRT touch display for automatic teller machines"

## Description

### BACKGROUND OF THE INVENTION

The present invention relates to a data processing machine and a method for carrying out a diagnosis on a function of a data processor in accordance with the precharacterizing parts of the claims 1 and 3 respectively.

Such a data processing machine and such a diagnosis method are known from ADVANCES IN INSTRUMENTATION, Vol. 40, Part 1, 1985, pages 347-362; J.J. Pinto "Software for Industrial Microcomputer Applications".

In a data processing machine which is conventionally used in a POS system for example, in case a diagnosis is performed by simulation to determine whether an internal apparatus such as a storage device or an arithmetic unit operates normally and to select an apparatus wherewith a diagnostic function is caused to be carried out, there has been known a data processing machine wherein an identifier of the apparatus or a number and the like for specifying the device is inputted or an operator looks at a list of internal apparatuses displayed on a display device and inputs a corresponding number, thereby to cause the diagnostic function to be executed.

In addition, a data processing machine has been known in which a display device has a touch response screen so that an operator can select the data displayed on the display device and inputs it as the operator touches with fingers the portion of the touch response screen which corresponds to the selected data.

However, in the aforementioned data processing machine, it used to be difficult to determine the correspondence between an identifier of the subject of diagnosis and the subject of diagnosis as the substance. It also used to take time for input.

In the aforementioned data processing machine, data input can be simplified but the selection of the diagnostic function is not mentioned.

The abovementioned Advances In Instrumentation teaches that an industrial computer may comprise a touch-sensitive screen simulating annunciator-panel push-buttons (last but one paragraph on page 350). Further, this document discloses in the last paragraph on page 351 that a process engineer can add diagnostics and operator conveniences by simply calling up standard screens and that an operator can build his own diagnostics or sequences.

This document does neither show how the diagnostic mode for diagnosing a function of a processor can be selected on the touch-sensitive screen nor a specific diagnosing scheme.

EP-A-0 030 160 discloses an interactive user-machine interface method and apparatus comprising a touch-sensitive screen for putting in a plurality of functions, e. g. for a copying machine. EP-A-0 030 160 describes that visual elements which are presented to the user on the touch-sensitive screen include instructions in text and images. Displayed images may include and log status indicators indicating the status of the machine and buttons which the operator can touch to signal control requests. EP-A-0 030 160 does not relate to selecting and performing diagnostics of a data processing machine.

IBM TDB, volume 29, No. 1, June 1986, pages 429 - 430, New York, US: "CRT Touch Display For Automatic Teller Machines" describes a specific touch-sensitive display for use with automatic teller machines, the specific CRT touch display including a laminated face plate consisting of specular filter, lattice filter and contrast filter together with transducer 4 and its flat foil conductive circuit being clamped together by a front frame and a back frame under controlled pressure provided by a gasket.

### SUMMARY OF THE INVENTION

The present invention is designed in the light of the above circumstances and has as its object to provide a data processing machine and a method which are capable of easy determination of a subject whose diagnostic function is desired to be executed.

The above object is, according to the invention solved by the features specified in the independent claims 1 and 3, respectively.

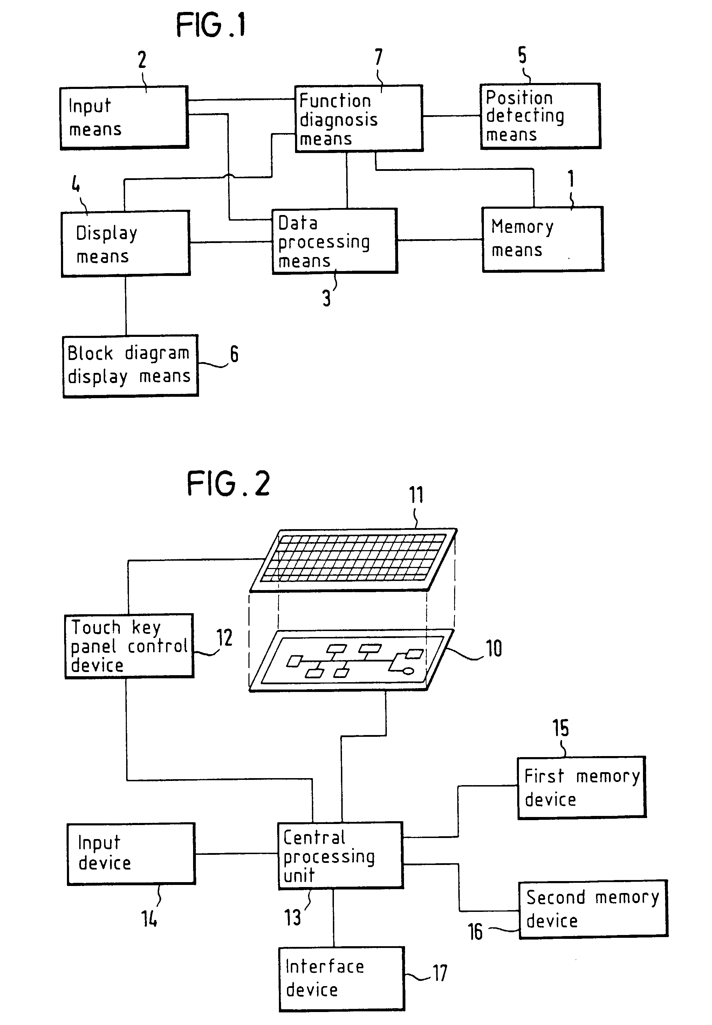

As shown in Fig. 1, the constitution of the data processing machine according to the present invention comprises a memory means 1 which is stored with a plurality of data and a data processing information for processing respective data which are the means related to the execution of data processing, an input means 2 which inputs data and specifies a desired data processing information, a data processing means 3 which reads out the specified data processing information from the memory means 1 according to the signal from the input means 2 and executes the data processing according to the read out data processing information, a display means 4 which displays the contents of respective data processing, a transparent position detecting means 5 which detects the position on a display screen installed closely adjacent to the display means 4, a block diagram display means 6 which causes the display means 4 to display the block diagram of the aforementioned means related respectively to the execution of data processing, and a function diagnosis means 7 which diagnoses whether the function of the aforementioned means corresponding to the block is normal when any of the respective block of the block diagram displayed in the display means 4 is selectively detected of the position by the position detecting means 5.

### BRIEF DESCRIPTION OF THE DRAWINGS

The present invention will become more fully understood from the detailed description given hereinbelow and the accompanying drawings which are given by way of illustration only, and thus are not limitative of the present invention and wherein: Fig. 1 is a block diagram showing the constitution of the present invention, Fig. 2 is a block diagram of an embodiment of the present invention, Fig. 3 is a block diagram showing the display screen of the block diagram of function diagnosis, Fig. 4 is a flowchart showing the operation of the embodiment, and Fig. 5 is a block diagram showing the display screen of the submenu No.1 of the function diagnosis.

### DESCRIPTION OF THE PREFERRED EMBODIMENT

The present invention will hereinafter be described in detail in accordance with the embodiment shown in the following diagrams but it shall be clearly understood that the present invention will not be limited by such embodiment.

Fig. 2 is a block diagram showing an embodiment of the present invention.

10 is a display device which displays a picture image by a liquid crystal display device, a CRT or a dot matrix type device, and on the display screen thereof is closely installed a transparent touch key panel 11 for detecting positions on the display screen. The transparent touch key panel 11 is divided into a number of small areas and each of respective small areas is gluded with a transparent electrode. Each transparent electrode is connected to a touch key panel control device 12 so that when an operator touches any transparent electrode, the touch key panel control device 12 detects the change in electrostatic capacity and determines which small area has been specified. Results of this operation are inputted into a central processing unit 13. With the central processing unit 13, an input device 14 for data input, a first memory device 15 wherein various data processing information (programs) or inputted data are stored, a second memory device 16 which is stored with functional diagnostic information for diagnosing the functions of the central processing unit 13, input device 14, the first memory device 15 or the display device 10, and an interface device 17 for communication with an external data processing device or a printer are connected. In this embodiment, the central processing device 13 is composed of a plurality of CPUs, that is, a master CPU, No. 1 slave CPU, and No.2 slave CPU.

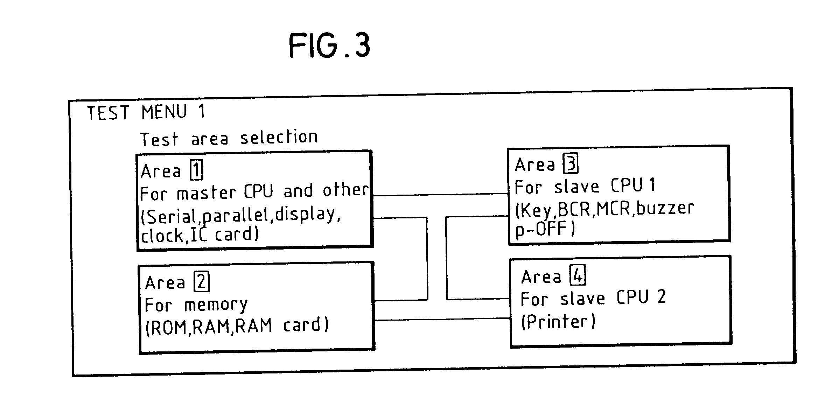

As a functional diagnostic information, a picture image information of a block diagram (refer to Fig. 3) comprising a plurality of blocks which are shown in correspondence with the subject of a plurality of functional diagnosis, a diagnostic program for diagnosing (test by simulation) respective subject of the functional diagnosis, and a criterion information for determining the results of diagnosis are prepared.

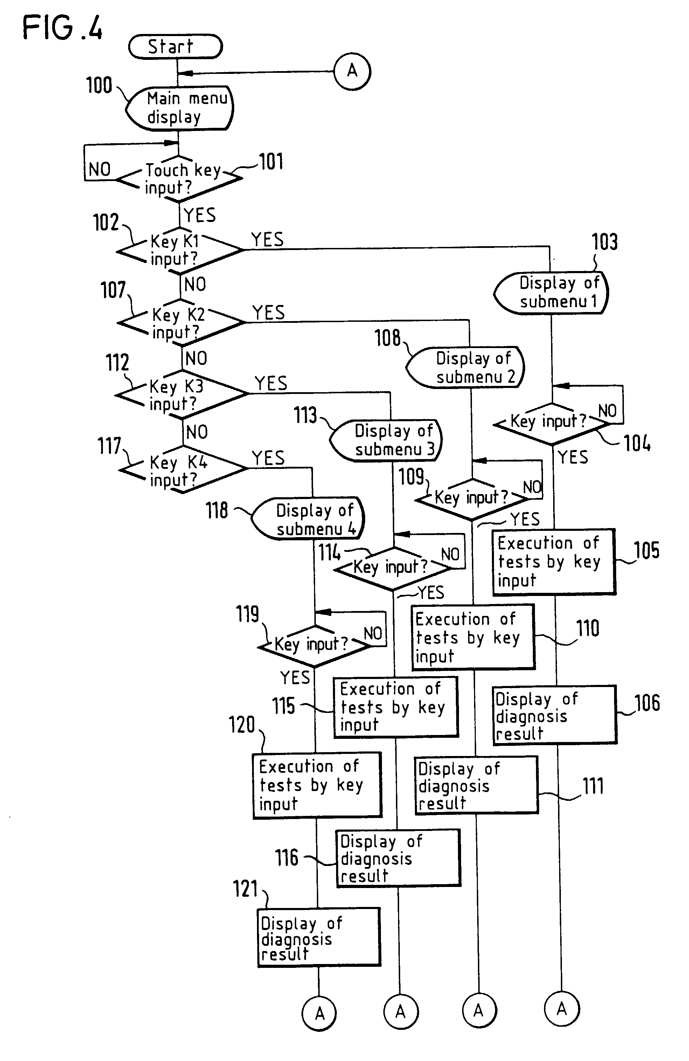

Operations of this embodiment will now be described with reference to Fig. 3 through Fig. 5.

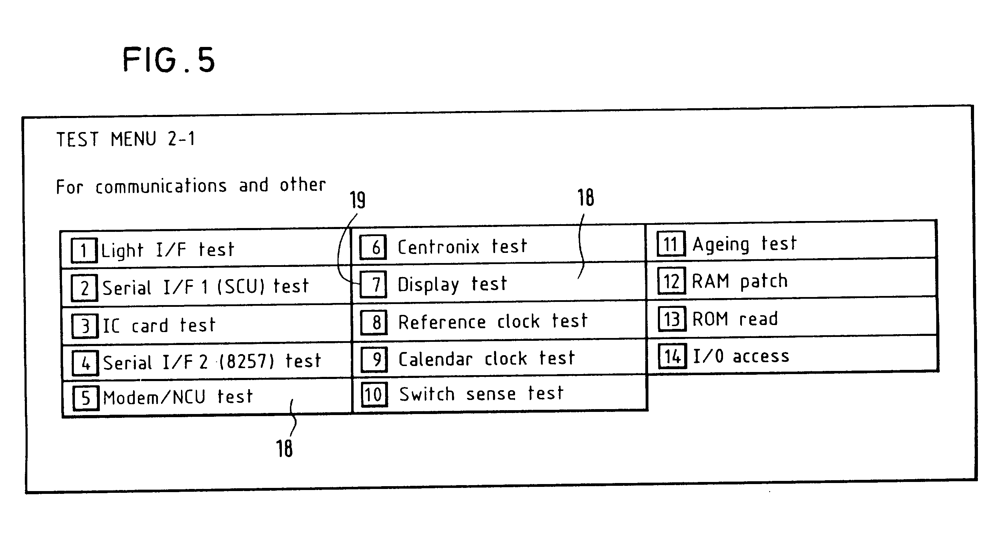

When a functional diagnosis is designated from the input device 14, the central processing device 13 causes the display device 10 to display (step 100) the block diagram which is the functional diagnosis main menu (test menu 1). As shown in Fig. 3, the block diagram of the main menu is composed of an area 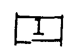 , area 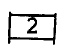 , area 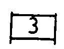 and area 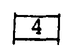 . The subject of diagnosis indicated by the area 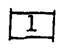 relates to the master CPU and is intended for the functional diagnosis of the serial and parallel data communication, display, calendar clock and IC card. The subject of diagnosis indicated by the area 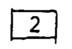 relates to the first memory device 15 and is intended for ROM, RAM, and RAM cards. In the area 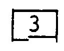 , the subject of diagnosis related to No.1 slave CPU is indicated and the input device (key) 14, BCR, MCR, buzzer, and P-OFF are included in the subject of diagnosis. In the area 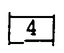 , No.2 slave CPU is indicated as the subject of diagnosis and a printer is included therein. In a condition where the block diagram is displayed, the central processing device 13 determines whether the portion corresponding to any area of the touch key panel 11 is touched by an operator, that is whether the touch key input is accomplished, according to the signal from the touch key panel control device 12 (step 101). When a touch key input is executed, the touch key input is determined whether it is the input of the key K1 which corresponds with the area 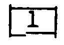 of the block diagram displayed on the display device 10 (step 102), and if it is the input of the key K1, that is, if the area 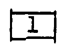 of the block diagram is selected, the submenu No.1 (test menu 2) shown in Fig. 5 is displayed on a display device (step 103). The submenu No.1 fragments the master CPU function which is the subject of the functional diagnosis of the area 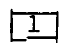 of the block diagram and displays the fragmented function as a list, and for example, the subject of the functional diagnosis comprising of 14 items is displayed as shown in Fig. 5. Respective display item 18 is provided respectively corresponding to the item number 19. In a condition wherein the submenu No.1 is displayed, the central processing device 13 determines whether the portion of the touch key panel 11 corresponding to the item number 19 has been touched (presence of key input) with fingers of an operator, according to the signal from the touch key panel control device 12 (step 104). When an key input is executed, the diagnostic function (test) indicated in the selected display item is executed (step 105), and subsequent diagnostic results are displayed on the display means 10 (step 106). After an operator has confirmed the result of diagnosis, the main menu is displayed again as the operator accomplishes a specified input by the input device 14.

In the above arrangement, if the area 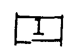 in the block diagram is not selected, the presence of the input of the key K2 corresponding to the area 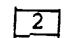 of the block diagram is determined (step 107). If the area 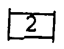 is selected, that is, if the input of the key K2 is executed, as in the case of the area 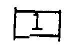 , the submenu No.2 with fragmented diagnostic function is displayed (step 108), and the processes (steps 109 to 111) which correspond with steps 104 to 106 are executed thereafter. If the area 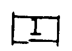 and the area 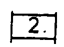 are not selected but the area 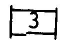 is selected, that is, when the presence of the input of the key K3 is determined (step 112) and the input of the key K3 executed, the submenu No.3 which is a submenu with respect to the area 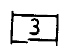 is displayed, and processes (steps 114 to 116) corresponding with steps 104 to 106 are exeucted thereafter. Further, if the area 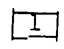 area 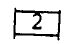 , and area 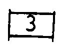 are not selected, the presence of the input of the key K4 corresponding with the area 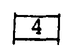 is determined (step 117), and if the input of the key K4 is executed, the submenu No.4 which is a submenu with respect to the area 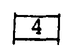 is displayed (step 118), and processes (119 to 121) corresponding to steps 104 to 106 are exeucted thereafter.

Incidentally, the touch key panel may be a resistance type wherein two electrodes are arranged at an interval at a position to be detected, other than a capacity.type which is described in the aforementioned embodiment.

In the aforementioned embodiment, the block diagram is composed of four blocks (areas), but the number of the block may be increased or decreased according to the circumstances by the number of the subject of functional diagnosis, and in this case, the number of the subject of functional diagnosis can be considered to prevent difficulty for the operator to make selections.

According to the present invention, because the subject of the functional diagnosis is displayed in the form of a block diagram on the display screen, the selection of the subject of diagnosis becomes very easy, and because a transparent position detecting means is used, a data processing device which improves the operating performance during selection can be obtained.

## Claims

1. A data processing machine having plural diagnosable functions comprising:
processing means (13) for performing plural diagnosable functions;
input means (14) for generating a diagnosis mode signal;
said processing means performing diagnosis of at least one of said plural diagnosable functions in response to receipt of said diagnosis mode signal;
display means (10) for displaying said plural diagnosable functions; and
selection means (11, 12) for selecting one of said plural diagnosable functions, said selection means including a transparent touch-sensitive panel (11) overlaying said display means (10) which detects a touched position of said display means in order to provide a function indication signal corresponding to a selected diagnosable function;
characterized by display drive means (6, 13) for driving said display means to present said plural diagnosable functions in a block diagram menu format in response to said diagnosis mode signal;
said display drive means (6, 13), in response to receipt of said function indication signal, driving said display means (10) to present a submenu of plural tests epplicable to said selected diagnosable function;
said selection means (11, 12) further provides a test indication signal corresponding to a touched position of said display screen which is indicative of a desired test; and
function diagnosis means (7), responsive to said test indication signal, for carrying out said desired test for said selected diagnosable function and for generating a test result;
said display means (10) displaying said test result.

2. The data processing machine of claim 2 wherein said data processor is a point of sale terminal (POS).

3. A method for carrying out a diagnosis on a function of a data processor having at least a plurality of function blocks, a display screen and a transparent touch-sensitive panel overlaying the display screen, characterized by the steps of:
generating a diagnosis mode designating signal for designating a diagnosis mode during which a diagnosis is carried out on a function of said data processor;
displaying a visual image having a plurality of areas on said display screen, in response to the generated diagnosis mode designating signal, each of said areas indicating a different one of said plurality of function blocks;
generating a first selecting signal for selecting a function block from the displayed plurality of function blocks through touching of said transparent touch-sensitive panel, a touched position on said transparent touch-sensitive panel corresponding to one of the displayed plurality of function blocks;
displaying a plurality of diagnosable functions for the selected function block, on said display screen in response to said first selecting signal;
generating a second selecting signal for selecting a function to be diagnosed from the displayed plurality of diagnosable functions through touching of said transparent touch-sensitive panel, a touched position on the panel corresponding to one of the displayed plurality of diagnosable functions;
carrying out the selected diagnosis on the selected function of the data processor to generate a test result in response to said second selecting signal; and
displaying said test result on said display screen.

## Patentansprüche

1. Datenverarbeitungsvorrichtung mit einer Anzahl diagnostizierbarer Funktionen, mit:
- einer Verarbeitungseinrichtung (13) zum Ausführen einer Anzahl diagnostizierbarer Funktionen;
- einer Eingabeeinrichtung (14) zum Ausführen eines Diagnosemodussignals;
- wobei die Verarbeitungseinrichtung die Diagnose gemäß mindestens einer der mehreren diagnostizierbaren Funktionen dann ausführt, wenn sie das Diagnosemodussignal erhält;
- einer Anzeigeeinrichtung (10) zum Anzeigen der mehreren diagnostizierbaren Funktionen; und
- einer Auswähleinrichtung (11, 12) zum Auswählen einer der mehreren diagnostizierbaren Funktionen, und die eine transparente, berührungsempfindliche Tafel (11) aufweist, die über der Anzeigeeinrichtung (10) liegt und eine Berührungsposition auf der Anzeigeeinrichtung erfasst, um ein Funktionsanzeigesignal zu liefern, das einer ausgewählten diagnostizierbaren Funktion entspricht;
**gekennzeichnet durch**
- eine Anzeigetreibereinrichtung (6, 13) zum Ansteuern der Anzeigeeinrichtung auf das Diagnosemodussignal hin in solcher weise, dass sie die Anzahl diagnostizierbarer Funktionen im Format eines Blockdiagrammmenüs anzeigt;
-- wobei diese Anzeigetreibereinrichtung (6, 13) bei Empfang des Funktionsanzeigesignals die Anzeigeeinrichtung (10) so ansteuert, dass sie ein Untermenü zu mehreren Tests wiedergibt, die bei der ausgewählten diagnostizierbaren Funktion anwendbar sind;
- wobei die Auswähleinrichtung (11, 12) ferner ein Testanzeigesignal liefert, das einer Berührungsposition auf dem Anzeigeschirm entspricht, die für einen gewünschten Test kennzeichnend ist; und
- eine Funktionsdiagnoseeinrichtung (7), die auf das Testanzeigesignal anspricht, um den gewünschten Test für die ausgewählte diagnostizierbare Funktion auszuführen und um ein Testergebnis zu erzeugen;
- wobei die Anzeigeeinrichtung (10) das Testergebnis anzeigt.

2. Datenverarbeitungsvorrichtung nach Anspruch 2, bei der der Datenprozessor ein Kassen(POS = point of sale)terminal ist.

3. Verfahren zum Ausführen einer Diagnose hinsichtlich einer Funktion eines Datenprozessors mit mindestens einer Anzahl von Funktionsblöcken, einem Anzeigeschirm und einer transparenten, berührungsempfindlichen Tafel, die über dem Anzeigeschirm liegt, **gekennzeichnet durch** die folgenden Schritte:
- Erzeugen eines einen Diagnosemodus spezifizierenden Signals zum Spezifizieren eines Diagnosemodus, während dem eine Diagnose hinsichtlich einer Funktion des Datenprozessors ausgeführt wird;
- Anzeigen eines sichtbaren Bilds mit einer Anzahl von Bereichen auf dem Anzeigeschirm auf das erzeugte Signal zum Spezifizieren des Anzeigemodus hin, wobei jeder der Bereiche einen anderen der mehreren Funktionsblöcke kennzeichnet;
- Erzeugen eines ersten Auswählsignals zum Auswählen eines Funktionsblocks aus der angezeigten Anzahl von Funktionsblöcken durch Berühren der transparenten, berührungsempfindlichen Tafel, wobei die berührte Position auf der transparenten, berührungsempfindlichen Tafel einem unter der Anzahl angezeigter Funktionsblöcke entspricht;
- Anzeigen einer Anzahl diagnostizierbarer Funktionen für den ausgewählten Funktionsblock auf dem Anzeigeschirm auf das erste Auswählsignal hin;
- Erzeugen eines zweiten Auswählsignals zum Auswählen einer zu diagnostizierenden Funktion aus der angezeigten Anzahl diagnostizierbaren Funktionen durch Berühren der transparenten, berührungsempfindlichen Tafel, wobei die berührte Position auf der Tafel einer unter der Anzahl angezeigter diagnostizierbarer Funktionen entspricht;
- Ausführen der ausgewählten Diagnose zur ausgewählten Funktion des Datenprozessors, um ein Testergebnis zu erzeugen, was auf das zweite Auswählsignal hin erfolgt; und
- Anzeigen des Testergebnisses auf dem Anzeigeschirm.

## Revendications

1. Dispositif de traitement de données comportant plusieurs fonctions pouvant être diagnostiquées, comprenant :
des moyens de traitement (13) pour exécuter plusieurs fonctions pouvant être diagnostiquées;
des moyens d'entrée (14) pour produire un signal de mode de diagnostic;
lesdits moyens de traitement exécutant le diagnostic d'au moins l'une de ladite pluralité de fonctions pouvant être diagnostiquées, en réponse à la réception dudit signal de mode de diagnostic;
des moyens d'affichage (10) pour afficher ladite pluralité de fonctions pouvant être diagnostiquées; et
des moyens de sélection (11,12) pour sélectionner l'une de ladite pluralité de fonctions pouvant être diagnostiquées, lesdits moyens de sélection comprenant un panneau tactile transparent (11) recouvrant lesdits moyens d'affichage (10) et qui détecte un position touchée desdits moyens d'affichage de manière à fournir un signal d'indication de fonction correspondant à une fonction sélectionnée pouvant être diagnostiquée;
caractérisé par des moyens de commande (6,13) du dispositif d'affichage pour commander lesdits moyens d'affichage de manière à présenter ladite pluralité de fonctions pouvant être diagnostiquées sous un format de menu en forme de schéma-bloc en réponse audit signal de mode de diagnostic;
lesdits moyens de commande d'affichage (6,13) commandant, en réponse à la réception dudit signal d'indication de fonction, lesdits moyens d'affichage (10) pour présenter un menu secondaire de plusieurs tests applicables à ladite fonction pouvant être diagnostiquée, qui est sélectionnée;
lesdits moyens de sélection (11,12) délivrent en outre un signal d'indication de test correspondant à une position touchée dudit écran d'affichage, qui est indicative d'un test désiré; et
des moyens (7) de diagnostic de fonctions, aptes à répondre audit signal d'indication de test, pour exécuter ledit test désiré, c'est-à-dire pour ladite fonction pouvant être diagnostiquée, qui est sélectionnée, et pour produire un résultat de test;
lesdits moyens d'affichage (10) affichant ledit résultat de test.

2. Dispositif de traitement de données selon la revendication 1, dans lequel ledit processeur de données est un terminal de point de vente (POS).

3. Procédé pour l'exécution d'un diagnostic d'une fonction d'un processeur de données possédant au moins une pluralité de blocs de fonctions, un écran d'affichage et un panneau tactile transparent recouvrant l'écran d'affichage, caractérisé par les étapes consistant à :
produire un signal de désignation de mode de diagnostic pour désigner un mode de diagnostic pendant lequel un diagnostic est exécuté en fonction dudit processeur de données;
afficher une image visuelle possédant une pluralité de zones sur ledit écran d'affichage, en réponse au signal de désignation de mode de diagnostic produit, chacune desdits zones indiquant un bloc différent faisant partie de ladite pluralité de blocs de fonctions;
produire un premier signal de sélection pour sélectionner un bloc fonctionnel parmi la pluralité affichée de blocs de fonctions par attouchement desdits panneaux tactiles transparents, une position touchée sur ledit panneau tactile transparent correspondant à un bloc parmi la pluralité affichée de blocs de fonctions;
afficher une pluralité de fonctions pouvant être diagnostiquées pour le bloc sélectionné de fonctions, sur ledit écran d'affichage en réponse audit premier signal de sélection;
produire un second signal de sélection pour sélectionner une fonction devant être diagnostiquée à partir de la pluralité affichée de fonctions pouvant être diagnostiquées, par attouchement dudit panneau tactile transparent, une position touchée sur le panneau correspondant à une fonction de la pluralité affichée de fonctions pouvant être diagnostiquées;
exécuter le diagnostic choisi sur la fonction choisie du processeur de données pour produire un résultat de test en réponse audit second signal de sélection; et
afficher ledit résultat de test sur ledit écran d'affichage.
